# EUROPÄISCHE PATENTSCHRIFT

(11) **EP 2 565 068 B1**
(45) Veröffentlichungstag und Bekanntmachung des Hinweises auf die Patenterteilung: **27.04.2016**
(21) Anmeldenummer: 12180086.6
(22) Anmeldetag: 10.08.2012
(51) Int. Cl.: B60K 6/48, B60K 6/52, B62D 55/06

(54) **Kettenfahrzeug**
Track vehicle
Véhicule à chenilles

(30) Priorität: 27.08.2011 DE 102011111822
(43) Veröffentlichungstag der Anmeldung: 06.03.2013
(73) Patentinhaber: Rheinmetall Landsysteme GmbH, 29345 Unterlüß (DE)
(72) Erfinder: Lenz, Olaf, 24113 Molfsee (DE); Ellrich, Karl-Theodor, 65201 Wiesbaden (DE)
(74) Vertreter: Dietrich, Barbara

(56) Entgegenhaltungen:
- EP-A1- 2 256 247
- DE-A1- 10 005 527
- DE-U1- 29 607 651
- US-A1- 2011 009 235

## Beschreibung

Die Erfindung betrifft ein Kettenfahrzeug, insbesondere ein gepanzertes militärisches Kettenfahrzeug, mit beidseitig an dem Fahrzeug angeordneten Gleisketten, die jeweils durch ein heck- oder frontseitig an dem Kettenfahrzeug angeordnetes erstes Kettentriebrad antreibbar sind und die von den Kettentriebrädern axial gegenüberliegenden Umlenkräder umgelenkt werden, wobei die ersten Kettentriebräder über mindestens ein Getriebe von einem als Verbrennungsmotor ausgebildeten Antriebsmotor antreibbar sind und der Antriebsmotor zur Stromerzeugung elektrischer Verbraucher mit einem elektrischen Generator verbunden ist.

Vorhandene gepanzerte militärische Kettenfahrzeuge werden regelmäßig Kampfwertsteigerungsprogrammen unterzogen, bei denen entsprechend der geänderten Bedrohungslage eine Verbesserung des Minen-, Dach- und Rundumschutzes im Vordergrund stehen. Dieser zusätzliche Schutz ist in der Regel mit einer Gewichtszunahme verbunden, welche bis zu 25 % des ursprünglichen Fahrzeuggewichtes betragen kann. Diese Gewichtszunahme hat einen erheblichen Einfluss auf die Mobilität des jeweiligen Fahrzeuges, da die zur Aufrechterhaltung der Mobilität erforderliche Leistungssteigerung des Triebwerkes des entsprechenden kampfwertgesteigerten Fahrzeuges häufig nicht realisierbar ist.

Zwar ist es in der Regel möglich, den vorhandenen Antriebsmotor durch einen modernen, leistungsstärkeren Antriebsmotor zu ersetzen, doch gilt dieses aufgrund der vorgegebenen Platzverhältnisse nicht auch für das Getriebe, das auf Grund der geforderten Lenk-und Bremsleistung an die höhere Fahrzeugmasse angepasst werden muss. Bei Anpassung des vorhandenen Getriebes an einen leistungsstärkeren Antriebsmotor kann es aber erforderlich sein, eine Reduzierung des Übersetzungsverhältnisses, beispielsweise im Seitenvorgelege des Kettenfahrzeuges, vorzunehmen, was dann eine Reduzierung der Höchstgeschwindigkeit des entsprechenden Kettenfahrzeuges bewirkt.

Aus einem Artikel im Internet vom 14.06.2011 zum Schützenpanzer "PUMA" (http://de.wikipedia.org/wiki/PUMA-(Sch%C3%BCtzenpanzer) ist ein Kettenfahrzeug der eingangs erwähnten Art bekannt, bei dem zur Versorgung der elektrischen Kühlerventilatoren sowie zum Antrieb eines Kältemittelkompressors in der Klimaanlage ein von dem Antriebsmotor angetriebener elektrischer Generator verwendet wird, bei dem es sich um einen elektrischen Schwungradgenerator handelt.

Das gattungsbildende Dokument DE 100 05 527 offenbart ein Kettenfahrzeug mit den Merkmalen des Oberbegriffs von Anspruch 1.

Der Erfindung liegt die Aufgabe zugrunde, eine Steigerung der Antriebsleistung insbesondere bei vorhandenen Kettenfahrzeugen zu erreichen, bei denen zwar ein leistungsstärkerer Antriebsmotor, aber das bereits vorhandene Getriebe weiter verwendet werden.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Die Erfindung beruht im Wesentlichen auf dem Gedanken, bei dem erfindungsgemäßen Kettenfahrzeug eine Leistungsverzweigung vorzusehen, wobei ein Teil der durch Einsatz eines leistungsstärkeren Antriebsmotors sich ergebenden Leistung, wie bisher, durch das vorhandene Getriebe auf die Gleisketten übertragen wird, und wobei der sich ergebende Leistungszuwachs mit Hilfe mindestens eines mit dem Antriebsmotor verbundenen elektrischen Generators in elektrische Energie umgewandelt wird, mit der dann auf die Umlenkräder wirkende Elektromotoren angetrieben werden. Dadurch wird über den elektrischen Anteil der Zuwachs an Motorleistung auf die Gleisketten übertragen und zur Mobilitätsverbesserung des Kettenfahrzeuges genutzt.

Vorzugsweise enthält das erfindungsgemäße Kettenfahrzeug eine elektronische Steuereinrichtung, mit welcher der Anteil an mechanischer und elektrisch in die Gleisketten eingebrachten Leistungen möglichst ausgeglichen wird, sodass es nicht zu einer asymmetrischen Belastung der Gleisketten kommt.

Außerdem können mittels der elektronischen Steuereinrichtung die Elektromotoren derart angesteuert werden, dass unter anderem auch die Funktionen "Bremsen" und "Lenken" über diese Einrichtung realisiert werden.

Als zweckmäßig hat es sich ferner erwiesen, wenn als elektrischer Generator ein Schwungradgenerator verwendet wird (in der Regel ein im Schwungrad des Antriebsmotors untergebrachter Startergenerator).

Um eine platzsparende Anordnung der Elektromotoren zu erhalten, hat es sich als vorteilhaft erwiesen, wenn es sich bei den Elektromotoren um Nabenmotoren handelt, die in den Umlenkrädern angeordnet sind.

Es ist aber auch möglich, dass die Elektromotoren jeweils über ein Seitenvorgelege auf die Umlenkräder wirken.

Bei den Umlenkrädern kann es sich sowohl um Zahnkränze als auch um Rollen handeln, je nach dem, ob die mechanische Leistung über Formschluss oder über Reibschluss auf die Gleisketten übertragen werden soll.

Mit der vorhandenen elektrischen Leistung lässt sich zusätzlich auch der Antrieb der Lüfter der Kühlanlage betreiben, wobei die für den Lüfterantrieb erforderliche Leistung dem Bedarf optimal angepasst und bedarfsgerecht genutzt werden kann.

Der Vorteil der vorgeschlagenen Lösung liegt darin, dass eine Steigerung der Antriebsleistung auch unter Verwendung des vorhandenen Getriebes möglich ist, indem der Anteil der durch Ersatz des Motors durch eine leistungsstärkeren, leistungsverzweigt über einen zweiten elektrischen Antriebsstrang übertragen werden kann. Ein weiterer Vorteil der Erfindung besteht darin, dass durch die Verwendung von Elektromotoren ein Schleichbetrieb und/oder Unterwasserfahrten des Kettenfahrzeuges bei Verwendung entsprechender Batterien oder Brennstoffzellen möglich ist (sind). Gleichzeitig ist es möglich, den ständig gesteigerten Bedarf an elektrischer Leistung des Gesamtsystems ohne Einsatz einer APU zu decken, was in Bezug auf das Gesamtsystem Gewichts-, Volumen- und Kostenvorteile mit sich bringt. Zusätzlicher Leistungsbedarf kann dann auch bei einem schweren Fahrzeug über die Leistungsverzweigung in das Laufwerk eingespeist werden.

Weitere Einzelheiten und Vorteile der Erfindung ergeben sich aus dem folgenden, anhand einer Figur erläuterten Ausführungsbeispiel.

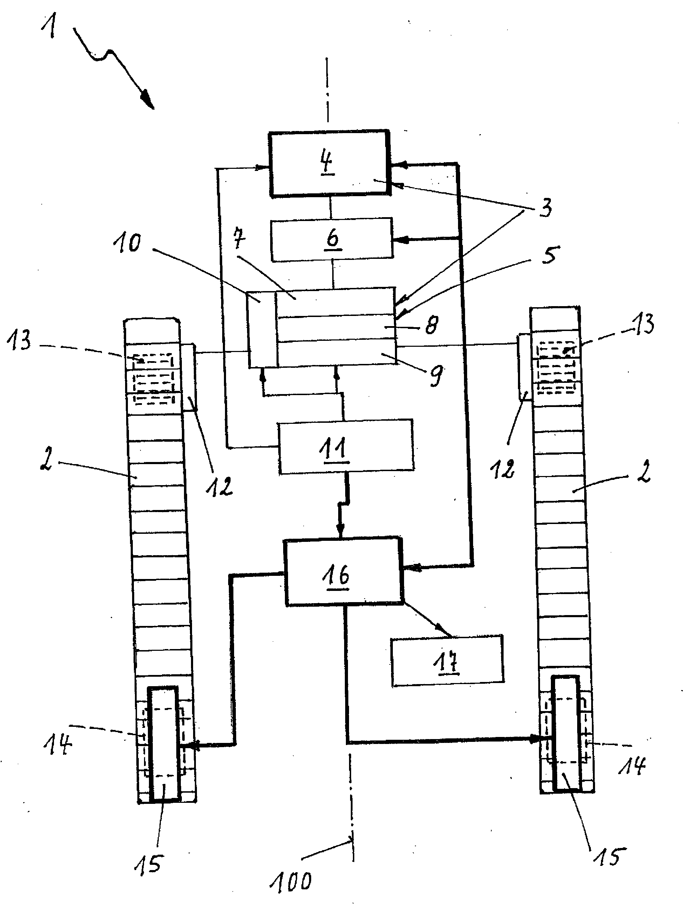

Die Figur zeigt das Antriebsschema eines erfindungsgemäßen Kettenfahrzeuges, bei dem es sich beispielsweise um einen kampfwertgesteigerten, an sich bekannten Schützenpanzer handeln kann.

Das mit 1 bezeichnete Kettenfahrzeug ist mit beidseitig an dem Fahrzeug angeordneten Gleisketten 2 versehen und weist bei dem dargestellten Ausführungsbeispiel ein heckseitig angeordnetes Triebwerk 3 auf.

Das Triebwerk 3 besteht aus einem leistungsgesteigerten Verbrennungsmotor 4 - beispielsweise ein MTU Motor - zur Erzeugung der für den Vortrieb und Lenkung erforderlichen Leistung sowie ein dem Antriebsmotor 4 nachgeschaltetes (bereits vor der Kampfwertsteigerung vorhandenes) Getriebe 5 - beispielsweise ein RENK Getriebe. Außerdem treibt der Antriebsmotor 4 einen Schwungradgenerator 6 zur Erzeugung elektrischer Leistung an.

Das Getriebe 5 umfasst im Wesentlichen einen hydrodynamischen Wandler 7, ein Schaltgetriebe 8, ein Lenkgetriebe 9 sowie eine integrierte oder angebaute Reibungsbremse 10 (ggf. mit Retarder).

Ferner ist eine Betätigungseinrichtung 11 zur Durchführung der Lenkung, des Gasgebens, des Bremsvorganges sowie zur Betätigung des Schaltgetriebes 8 etc. vorgesehen.

Das Getriebe 5 wirkt über Seitenvorgelege 12 auf ebenfalls heckseitig an dem Kettenfahrzeug 1 angeordnete, gestrichelt dargestellte, erste Kettentriebräder 13, denen - in Richtung der Längsachse 100 des Kettenfahrzeuges 1 gesehen - axial gegenüberliegend Umlenkräder 14 angeordnet sind.

Erfindungsgemäß ist nun vorgesehen, dass die Umlenkräder 14 als zweite Kettentriebräder ausgebildet und jeweils mit einem vorzugsweise in den Umlenkrädern 14 untergebrachten Elektromotor 15 gekoppelt sind. Die in den Naben der Umlenkräder 14 untergebrachten Elektromotoren 15 werden über eine Steuereinrichtung 16 mit der vom Schwungradgenerator 6 erzeugten elektrischen Leistung versorgt. Dabei sind die Umlenkräder 14 beispielsweise als Rollen ausgebildet, derart, dass die mechanische Leistung der Rollen über Reibschluss auf die Gleisketten 2 übertragen wird.

Die Steuereinrichtung 16 übemimmt das Energiemanagement des Gesamtsystems und steuert die in den Umlenkrädern 14 untergebrachten Elektromotoren 15 entsprechend der durch den Fahrer des Kettenfahrzeuges 1 über die Betätigungseinrichtung 11 vorgegebenen Fahrstrategie (Beschleunigen/Verzögern, Lenken, Bremsen). Sie verhindert dadurch eine Überlastung des unverändert gebliebenen Getriebes 5. Gleichzeitig steuert sie den Verbrennungsmotor 4 derart, dass ein für den jeweiligen Fahrzustand optimaler Betriebspunkt erreicht wird.

Der Schwungradgenerator 6 ist vorzugsweise derart ausgelegt, dass die zur Verfügung stehende elektrische Leistung ausreicht, um zusätzlich zu dem Antrieb der Elektromotoren 15 auch weitere größere Verbraucher 17 (z.B. Lüfter) elektrisch anzutreiben.

Mit einem intelligenten Energiemanagement gelingt es außerdem, die vorhandene Triebwerksleistung situationsabhängig optimal einzusetzen.

### Bezugszeichenliste

- 1: Kettenfahrzeug, Fahrzeug
- 2: Gleiskette
- 3: Triebwerk
- 4: Verbrennungsmotor, Antriebsmotor
- 5: Getriebe
- 6: Generator, Schwungradgenerator
- 7: hydrodynamischer Wandler
- 8: Schaltgetriebe
- 9: Lenkgetriebe
- 10: Reibungsbremse
- 11: Betätigungseinrichtung
- 12: Seitenvorgelege
- 13: erstes Kettentriebrad
- 14: zweites Kettentriebrad, Umlenkrad
- 15: Elektromotor
- 16: Steuereinrichtung
- 17: Verbraucher
- 100: Längsachse

## Patentansprüche

1. Kettenfahrzeug mit beidseitig an dem Fahrzeug (1) angeordneten Gleisketten (2), die jeweils durch ein heck- oder frontseitig an dem Kettenfahrzeug (1) angeordnetes erstes Kettentriebrad (13) antreibbar sind und die von den Kettentriebrädern (13) axial gegenüberliegenden Umlenkräder (14) umgelenkt werden, wobei ein Antriebsmotor (4) zur Stromerzeugung elektrischer Verbraucher mit einem Generator (6) verbunden ist, **dadurch gekennzeichnet, dass** die Umlenkräder (14) als zweite Kettentriebräder ausgebildet und hierzu jeweils mit einem Elektromotor (15) gekoppelt sind und der Generator (6) über eine Steuereinrichtung (16) mit den Elektromotoren (15) verbunden ist, wobei der Generator (6) derart ausgelegt ist, dass mit der von ihm erzeugten elektrischen Energie die auf die Umlenkräder (14) wirkenden Elektromotoren (15) antreibbar sind.

2. Kettenfahrzeug nach Anspruch 1, **dadurch gekennzeichnet, dass** es sich bei den Elektromotoren (15) um Nabenmotoren handelt, die in den Umlenkrädern (14) angeordnet sind.

3. Kettenfahrzeug nach Anspruch 1, **dadurch gekennzeichnet, dass** die Elektromotoren (15) jeweils über ein Seitenvorgelege auf die Umlenkräder (14) wirken.

4. Kettenfahrzeug nach einem der Ansprüche 1 bis 3, **dadurch gekennzeichnet, dass** die Umlenkräder (14) jeweils als Zahnkranz oder als Rolle ausgebildet sind, um die mechanische Leistung über Formschluss oder über Reibschluss auf die Gleisketten (2) zu übertragen.

5. Kettenfahrzeug nach einem der Ansprüche 1 bis 4, **dadurch gekennzeichnet, dass** es sich bei dem Generator (6) um einen Schwungradgenerator handelt.

6. Kettenfahrzeug nach einem der Ansprüche 1 bis 5, **dadurch gekennzeichnet, dass** die ersten Kettentriebräder (13) über mindestens ein Getriebe (5) von einem als Verbrennungsmotor (4) ausgebildeten Antriebsmotor antreibbar sind.

## Claims

1. Track-type vehicle having track chains (2) arranged at both sides on the vehicle (1), which track chains can be driven in each case by a first chain-driving wheel (13) arranged at the rear side or front side on the track-type vehicle (1) and which track chains are diverted by diverting wheels (14) situated axially opposite the chain-driving wheels (13), wherein a drive engine (4) is, for the supply of electricity to electrical consumers, connected to a generator (6), **characterized in that** the diverting wheels (14) are formed as second chain-driving wheels and, for this purpose, are each coupled to an electric motor (15), and the generator (6) is connected by way of a control device (16) to the electric motors (15), wherein the generator (6) is designed such that the electric motors (15) which act on the diverting wheels (14) can be driven by way of the electrical energy generated by said generator.

2. Track-type vehicle according to Claim 1, **characterized in that** the electric motors (15) are hub motors which are arranged in the diverting wheels (14).

3. Track-type vehicle according to Claim 1, **characterized in that** the electric motors (15) act on the diverting wheels (14) in each case via a lateral intermediate transmission.

4. Track-type vehicle according to one of Claims 1 to 3, **characterized in that** the diverting wheels (14) are each in the form of a toothed ring or a roller so as to transmit the mechanical power to the track chains (2) by positive engagement or by frictional engagement.

5. Track-type vehicle according to one of Claims 1 to 4, **characterized in that** the generator (6) is a flywheel generator.

6. Track-type vehicle according to one of Claims 1 to 5, **characterized in that** the first chain-driving wheels (13) can be driven, via at least one gearing (5), by a drive engine in the form of an internal combustion engine (4).

## Revendications

1. Véhicule à chenilles avec des chenilles (2) placées de part et d'autre sur le véhicule (1) qui sont susceptibles d'être entraînées chacune par une première roue à entraînement par chaîne (13) placée côté frontal ou côté arrière sur le véhicule à chenilles (1) et dont la direction est changée par des roues de déviation (14) opposées aux roues à entraînement par chaîne (13) en direction axiale, un moteur d'entraînement (4) étant relié avec un générateur (6) pour la génération de courant pour des consommateurs électriques, **caractérisé en ce que** les roues de déviation (14) sont conçues en tant que deuxièmes roues à entraînement par chaîne et à cet effet, sont couplées chacune avec un moteur électrique (15) et le générateur (6) est relié par l'intermédiaire d'un dispositif de commande (16) avec les moteurs électriques (15), le générateur (6) étant conçu de telle sorte que les moteurs électriques (15) agissant sur les roues de déviation (14) puissent être entraînés à l'aide de l'énergie électrique générée par lui.

2. Véhicule à chenilles selon la revendication 1, **caractérisé en ce que** les moteurs électriques (15) sont des moteurs montés sur moyeu qui sont placés dans les roues de déviation (14).

3. Véhicule à chenilles selon la revendication 1, **caractérisé en ce que** les moteurs électriques (15) agissent chacun sur les roues de déviation (14) par l'intermédiaire d'une transmission intermédiaire latérale.

4. Véhicule à chenilles selon l'une quelconque des revendications 1 à 3, **caractérisé en ce que** les roues de déviation (14) sont conçues chacune en tant que couronne dentée ou en tant que galet, pour transmettre la puissance mécanique par complémentarité de forme ou par frottement sur les chenilles (2).

5. Véhicule à chenilles selon l'une quelconque des revendications 1 à 4, **caractérisé en ce que** le générateur (6) est un générateur à volant.

6. Véhicule à chenilles selon l'une quelconque des revendications 1 à 5, **caractérisé en ce que** les premières roues à entraînement par chaîne (13) sont susceptibles d'être entraînées par l'intermédiaire d'au moins un engrenage (5) par un moteur d'entraînement conçu en tant que moteur thermique (4).
